(19) Europäisches Patentamt
European Patent Office
Office européen des brevets

(11) **EP 4 114 703 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **21712036.9**

(22) Anmeldetag: **23.02.2021**

(51) Internationale Patentklassifikation (IPC):
**B60W 50/00** (2006.01)      **G05D 1/00** (2024.01)

(52) Gemeinsame Patentklassifikation (CPC):
**B60W 50/0097; G05D 1/0212;** B60W 2050/0037;
B60W 2520/10; B60W 2520/105; B60W 2530/10;
B60W 2540/16; B60W 2720/106

(86) Internationale Anmeldenummer:
**PCT/DE2021/200021**

(87) Internationale Veröffentlichungsnummer:
**WO 2021/175384 (10.09.2021 Gazette 2021/36)**

(54) **VERFAHREN ZUR STEUERUNG EINES FAHRZEUGS, KORRESPONDIERENDES COMPUTERPROGRAMM, SPEICHERMEDIUM, UND ENTSPRECHENDE STEUEREINRICHTUNG**

METHOD FOR STEERING A VEHICLE, CORRESPONDING COMPUTER PROGRAM, STORAGE MEDIUM, AND CORRESPONDING CONTROL DEVICE

PROCÉDÉ DE DIRECTION D'UN VÉHICULE, PROGRAMME INFORMATIQUE CORRESPONDANT, SUPPORT DE STOCKAGE ET DISPOSITIF DE COMMANDE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2020 DE 102020202758**

(43) Veröffentlichungstag der Anmeldung:
**11.01.2023 Patentblatt 2023/02**

(73) Patentinhaber: **Continental Autonomous Mobility Germany GmbH**
**85057 Ingolstadt (DE)**

(72) Erfinder:
• **KUNTSCHAR, Andreas**
**90411 Nürnberg (DE)**
• **LANDFRIED, Kai**
**90411 Nürnberg (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
**DE-A1- 102017 114 731    DE-A1- 102017 213 650**
**DE-A1- 102018 203 617**

• **JAIN VASUNDHARA ET AL: "Reacting to Multi-Obstacle Emergency Scenarios Using Linear Time Varying Model Predictive Control", 2019 IEEE INTELLIGENT VEHICLES SYMPOSIUM (IV), IEEE, 9 June 2019 (2019-06-09), pages 1822 - 1829, XP033606041, DOI: 10.1109/ IVS.2019.8813982**
• **YANFENG CONG ET AL: "Motion planning for an autonomous vehicle driving on motorways by using flatness properties", CONTROL APPLICATIONS (CCA), 2010 IEEE INTERNATIONAL CONFERENCE ON, IEEE, PISCATAWAY, NJ, USA, 8 September 2010 (2010-09-08), pages 908 - 913, XP031781947, ISBN: 978-1-4244-5362-7**

## Beschreibung

Die vorliegende Erfindung betrifft ein Verfahren zur Trajektorienplanung für ein Fahrzeug, ein Steuersystem, die dazu hergerichtet ist, eine erfindungsgemäße Trajektorienplanung durchzuführen, sowie ein Computerprogramm mit Programmcode zur Durchführung eines erfindungsgemäßen Verfahrens und ein computerlesbares Speichermedium, welches den Computer, auf dem es ausgeführt wird, veranlasst, das erfindungsgemäße Verfahren auszuführen.

Technologischer Hintergrund

Moderne Fahrzeuge, wie z. B. Personenkraftfahrzeuge (PKW), Lastkraftwägen (LKW) oder Motorräder, werden zunehmend mit Fahrerassistenzsystemen ausgerüstet, welche mit Hilfe von Sensoren die Umgebung sowie darin befindliche Objekte erfassen, Verkehrssituation erkennen und den Fahrer unterstützen können, z. B. durch einen Brems- oder Lenkeingriff oder durch die Ausgabe einer optischen oder akustischen Warnung. Als Sensoren zur Objekt- und/oder Umfelderfassung werden regelmäßig Radarsensoren, Lidarsensoren, Kamerasensoren oder dergleichen eingesetzt. Aus den durch die Sensoren ermittelten Sensordaten können anschließend Rückschlüsse auf die Umgebung gezogen werden. Dabei werden die verarbeiteten Sensorinformationen zur Umfelderkennung verwendet, um darauf basierend Anweisungen zur Fahrerwarnung/-Information oder zum geregelten Lenken, Bremsen und Beschleunigen zu geben. Durch die Sensor- und Umfelddaten verarbeitende Assistenzfunktionen können dann z. B. Unfälle mit anderen Verkehrsteilnehmern vermieden oder komplizierte Fahrmanöver erleichtert werden, indem die Fahraufgabe bzw. die Fahrzeugführung unterstützt oder sogar komplett übernommen wird (teil- / vollautomatisiert). Beispielsweise kann das Fahrzeug z. B. durch einen Notbremsassistenten (EBA, Emergency Brake Assist) eine autonome Notbremsung (AEB, Automatic Emergency Brake), durch einen Adaptive Cruise Control-Assistenten (ACC) eine Folgefahrt und Geschwindigkeitsregelung oder durch einen aktiven Spurhalteassistenten mit Lenkunterstützung in der Spur gehalten werden (LKA, Lane Keeping Assist). Zudem können auch mehrere dieser Funktionen in einem System vereint werden. Neben der Notbremsung in Gefahrensituationen ist insbesondere beim (voll-) automatisierten Führen eines Fahrzeuges der automatisierte Bremseneingriff von großer Bedeutung. Eine automatisierte Bremsung wird dabei in einer kritischen Umfeldsituation bzw. Verkehrsszene insbesondere bei einer drohenden Kollision eingeleitet.

Zur Steuerung des (teil-) automatisierten Fahrens werden in der Regel Steuersysteme eingesetzt, welche auf Aktoren des Fahrzeuges, z. B. Lenkung, Bremsen oder Motor, zugreifen und einen Trajektorienplaner (kurz: Planer) zur Planung und Auswahl von Trajektorien sowie einen oder mehrere Regler zur Umsetzung der Trajektorie umfassen. Dabei erfolgt der Datenfluss zur Steuerung im Wesentlichen entlang der Regelkette "Sense-Plan-Act" (Messen-Planen-Aktion), d. h. von links nach rechts. Der Planer verarbeitet hierbei vor allem Informationen aus dem Sense-Teil, d. h. den mittels Umfeldsensorik erfassten Umgebungs- und Objektdaten, wie z. B. Abstand und Geschwindigkeit des vorausfahrenden Fahrzeugs, nicht jedoch Informationen aus dem Act-Teil, wie z. B. aktuelle Aktor-Zustände und Aktor-Limitierungen. Stattdessen basiert der Planer-Ansatz in der Regel auf der Vereinfachung, dass keine Aktor-Limitierungen auftreten und die Aktor-Dynamiken vernachlässigbar sind. Realistischerweise wird eine Anforderung an den Aktor erst nach einer gewissen Aktor-Totzeit (d. h. der Zeitspanne zwischen der Signaländerung am Systemeingang und der Signalantwort am Systemausgang der Regelkette), mit einer bauartbedingten Dynamik und lediglich innerhalb des Aktor-Betriebsbereichs umgesetzt. Stehen dem Planer diese Informationen nicht zur Verfügung, kann dies zur Planung von nicht-fahrbaren Trajektorien führen. Beispielsweise werden Trajektorien geplant, welche mit der vorliegenden Aktor-Dynamik nicht umsetzbar sind oder außerhalb des Betriebsbereichs des Aktors liegen. In diesen Fällen kann sowohl ein Regler-Windup (Regler-Abriss) in den der Planung nachgelagerten Reglern als auch eine Neuplanung ausgelöst werden. Das Windup entsteht durch eine bleibende Regelabweichung und kann beispielsweise zum Unterschreiten des geplanten Abstands zum vorausfahrenden Fahrzeug führen. Beim Übergang von einer verzögernden zu einer beschleunigenden Trajektorie (oder umgekehrt) führt das Windup zu einer zusätzlich verspäteten Fahrzeug-Reaktion. Durch die Neuplanung wird die Regelabweichung künstlich verringert, was zu verminderter Genauigkeit führt. Durch permanente Verletzung der Aktorlimitierungen kann eine hochfrequente Neuplanung und damit zunehmender Drift zwischen notwendiger und tatsächlich gefahrener Trajektorie auftreten.

Gattungsgemäße Motor- und Bremssysteme geben üblicherweise keine Rückmeldung über Aktor-Begrenzungen an den Planer. Liegen dennoch Signale zu Aktor-Begrenzungen vor, dann gelten diese oftmals lediglich für den aktuellen Berechnungszyklus. Beispielsweise werden Motormoment-Maximum und -Minimum (d. h. das maximale Schleppmoment) vom Motorsteuergerät bereitgestellt, ohne jedoch einen Hinweis zu geben in welcher Zeit diese Maximalwerte erreicht werden können. Eine Prädiktion des maximalen Momenten-Gradients und damit des tatsächlichen Aktor-Potentials ist somit nicht verfügbar. Der Planer berechnet eine optimale Trajektorie mit einer zeitlichen Vorausschau. Sollen Limitierungen mithilfe der Formulierung von Randbedingungen im Planer eingebracht werden, dann müssen die Limitierungen mit zeitlicher Vorausschau zur Verfügung gestellt werden. Die vom Motorsteuergerät bereitgestellte Limitierung im aktuellen Zeitpunkt reicht nicht aus.

Somit können keine Aktor-Begrenzungen im Planer beachtet werden und es folgen Windup oder Neuplanungen.

Ferner werden, abgesehen von der fehlenden Prädiktion, die aktuellen Motormoment-Begrenzungen nicht im Planer genutzt, obwohl ein Planer mittels Optimierungsverfahren in der Lage ist Limitierungen in Form von Randbedingungen zu beachten. Der Grund dafür ist, dass keine Umrechnung der Aktor-Drehmoment-Begrenzung in eine Fahrzeug-Beschleunigungs-Begrenzung stattfindet. Der Planer berechnet jedoch eine optimale Trajektorie auf Basis der Fahrzeug-Längsbeschleunigung. Liegen die Aktor-Limitierungen lediglich als Dreh- bzw. Achsmomente vor, dann kann der Planer diese nicht nutzen, da der Planer kein Aktor/Fahrzeug-Modell zur Umrechnung von Drehmoment auf Beschleunigung enthält. Somit können keine Aktor-Begrenzungen im Planer beachtet werden.

Druckschriftlicher Stand der Technik

Aus der DE 10 2016 221 723 A1 ist ein Steuerungssystem für ein Fahrzeug mit mehreren Aktoren bzw. Aktuatoren (z. B. Lenkung, Antriebsstrang, Betriebsbremse und Einparkbremse) bekannt. Das Steuerungssystem umfasst dabei ein Modul zur Bewegungssteuerung des Fahrzeugs, ein Modul zur Aktuatorensteuerung, ein Modul zur Vorgabe einer umzusetzenden Fahrzeugbetriebsstrategie und ein Modul zur Momentkoordination, wobei aus den Bewegungsanforderungen an das Fahrzeug ein daraus resultierender normierter Anforderungsvektor mit einer longitudinalen Komponente, einer lateralen Komponente und einer vertikalen Komponente gebildet wird. Ferner ist das Steuerungssystem konfiguriert, um in Abhängigkeit von der Fahrzeugbetriebsstrategie und dem Anforderungsvektor Momente zu bilden, die auf die Aktuatoren verteilt werden.

Die DE 10 2015 209 066 A1 beschreibt ein Verfahren zur aufwandsreduzierte Trajektorienplanung für ein Fahrzeug, bei dem der Suchraumes zur Ermittlung der Trajektorie in Abhängigkeit von einem approximierten Endzeitpunkt begrenzt wird. Dabei wird der Suchraum zur Ermittlung der Trajektorie für das Fahrmanöver auf einen bestimmten Bereich um den approximierten Endzeitpunkt herum begrenzt, insbesondere um 10 % um den approximierten Endzeitpunkt herum, um den Rechenaufwand zur Ermittlung der Trajektorie zu reduzieren.

Aus der DE 10 2018 203 617 A1 ist ein Verfahren zum Berechnen einer Trajektorien-Limitierung für wenigstens ein Fahrerassistenzsystemeines Fahrzeugs gezeigt, wobei die Trajektorie innerhalb eines Suchraumes unter Berücksichtigung einer Vorausschau mindestens einer Stellgröße eines Aktors geplant und ein Aktor-Modell des Aktors anhand der Stellgröße ermittelt wird. Ferner werden Zeitschritten der Vorausschau festgelegt, eine Stellgrößenänderung des Aktors entlang der Zeitschritte anhand des Aktor-Modells und eines Grenzwertes der Stellgröße ermittelt, der Suchraum anhand des Grenzwertes der Stellgröße begrenzt ein Beschleunigungswert und/oder Verzögerungswert des Fahrzeuges durch Konvertieren der mindestens einen Stellgröße mit der Fahrzeugmasse und dem Radradius ermittelt. Danach erfolgt eine - Ausgabe des Beschleunigungswertes und des Verzögerungswertes zur Begrenzung des Suchraumes innerhalb dem die Trajektorie geplant wird.

Ferner beschreiben JAIN VASUNDHARA ET AL in "Reacting to Multi-Obstacle Emergency Scenarios Using Linear Time Varying Model Predictive Control" (2019 IEEE INTELLIGENT VEHICLES SYMPOSIUM (IV), IEEE, 9. Juni 2019, Seiten 1 822-1829, XP033606041, DOI: 1 0.1 1 09/1VS.201 9.881 3982) einen Ansatz zur Bewältigung von Notfallszenarien, in denen die Trajektorienplanung an die Grenzen von Aktuator und Reibung gelangt, unter Verwendung der linearen zeitvariablen prädiktiven Modellsteuerung bei Vorhandensein von statischen und dynamischen Hindernissen.

YANFENG CONG ET AL beschreiben in "Motion planning for an autonomous vehicle driving on motorways by using flatness properties" (CONTROL APPLTCATTONS (CCA), 2010 IEEE TNTERNATIONAL CONFERENCE ON, IEEE, PISCATAWAY, NJ, USA, 8. September 2010, Seiten 908-91 3, XP031 781947, ISBN: 978-1 -4244-5362-7) einen Bewegungsplanungsalgorithmus für ein autonomes Fahrzeug, das in einer strukturierten Umgebung mit beweglichen Hindernissen fährt, wobei sichergestellt wird, dass die Trajektorie machbar und effektiv ist, indem dynamische Längs- und Querbeschleunigungsbeschränkungen in Betracht gezogen werden.

Ferner offenbaren DE 10 2017 213 650 A1 und DE 10 2017 114731 A1 jeweils ein Verfahren zum Regeln eines hydraulischen Systems, bei dem anhand eines Modells des hydraulischen Systems für wenigstens eine Stellgröße ein einzustellender Stellgrößenwert ermittelt und eingestellt wird, wobei für einen Prädiktionshorizont eine vorbestimmte Anzahl an Stellgrößenwerten innerhalb eines vorbestimmten Wertebereichs vorgegeben wird, für jede der vorgegebenen Stellgrößenwerte ein Verlauf wenigstens einer Zustandsgröße des hydraulischen Systems ermittelt wird und von den ermittelten Verläufen ein Verlauf mit geringstem Gütemaß ausgewählt und die Stellgröße gemäß dem Verlauf eingestellt wird.

Aufgabe der vorliegenden Erfindung

Der vorliegenden Erfindung liegt daher die Aufgabe zugrunde, ein gattungsgemäßes Verfahren zur Steuerung eines Fahrzeuges zur Verfügung zu stellen, bei dem die Trajektorienplanung in einfacher und kostengünstiger Weise verbessert wird.

Lösung der Aufgabe

Die vorstehende Aufgabe wird durch die gesamte Lehre des Anspruchs 1 sowie der nebengeordneten Ansprüche gelöst. Zweckmäßige Ausgestaltungen der Erfindung sind in den Unteransprüchen beansprucht.

Bei dem erfindungsgemäßen Verfahren zur Steuerung eines Fahrzeuges entlang einer Trajektorie weist das Fahrzeug zumindest einen Aktor, vorzugsweise eine Mehrzahl von Aktoren auf. Ferner umfasst das Fahrzeug eine Steuereinrichtung, welche einen Trajektorienplaner aufweist, der die Trajektorie innerhalb eines festlegbaren Suchraumes unter Berücksichtigung einer Vorausschau bzw. Prädiktion mindestens einer Stellgröße des Aktors bzw. Reglers plant. Insbesondere eignet sich das Verfahren für die Planung von Trajektorien in Längsrichtung (Longitudinal Trajectory Planning). Das Verfahren umfasst dabei die Verfahrensschritte:

- Erstellen eines Aktor-Modells des Aktors anhand der mindestens einen Stellgröße des Aktors,
- Festlegen von Zeitschritten der Vorausschau,
- Ermitteln der Stellgrößenänderung des Aktors entlang der Zeitschritte anhand des Aktor-Modells und eines Grenzwertes der Stellgröße,
- Begrenzen des Suchraumes anhand des Grenzwertes der Stellgröße des Aktors,
- Ermitteln eines Beschleunigungswertes und/oder eines Verzögerungswertes des Fahrzeuges durch Konvertieren der mindestens einen Stellgröße mit der Fahrzeugmasse und dem Radradius, und
- Ausgabe des Beschleunigungswertes und des Verzögerungswertes zur Begrenzung des Suchraumes innerhalb dem die Trajektorie geplant wird bzw. der Trajektorienplaner nach einer möglichen Trajektorie sucht.

Aus dem erfindungsgemäßen Verfahrensablauf resultiert der Vorteil, dass sichergestellt wird, dass nur fahrbare Trajektorien vom Trajektorienplaner geplant werden, indem natürliche Begrenzungen der Aktoren mitberücksichtigt werden. In besonders einfacher Weise ermöglicht die Erfindung eine variable Vorausschau der Stellgröße(n), so dass die Methodik auch für mehrere Aktoren einsetzbar ist und kein komplexes Fahrzeugmodell benötigt wird. Darüber hinaus wird für das Verfahren nur eine einfache Parametrierung und aufgrund einer analytischen Berechnung nur einen geringen Rechenaufwand benötigt. Zudem ist es kompatibel mit unterschiedlichen Planungskonzepten und dadurch in besonders einfach und flexibel zu implementieren.

Vorzugsweise ist als Aktor ein Motor, z. B. Verbrennungsmotor oder Elektromotor, und/oder eine Bremse des Fahrzeuges vorgesehen ist. Alternativ oder zusätzlich kann aber auch eine die Lenkung als einer der Aktoren vorgesehen sein.

Gemäß einer bevorzugten Ausgestaltung der Erfindung ist als Stellgröße ein Moment, insbesondere ein Motormoment des Motors oder ein Bremsmoment der Bremse vorgesehen.

Ferner ist erfindungsgemäß als Grenzwert die maximal mögliche Änderung der Stellgröße in positiver und/oder negativer Richtung vorgesehen. Beispielsweise können als Stellgröße ein Moment bzw. ein Drehmoment eines Motors vorgesehen sein.

Zweckmäßigerweise kann das Aktor-Modell auf einer Funktion der Stellgröße basieren, welche gegen die Zeit aufgetragen einen positiven Anstieg der Stellgröße für den Stellgrößenaufbau und einen negativen Anstieg der Stellgröße für den Stellgrößenabbau aufweisen kann. Beispielsweise kann als Aktor-Modell bzw. als Aktor-Modelle ein Motor-Modell und/oder Bremsen-Modell vorgesehen sein. Sofern als Stellgröße dann das Motormoment bzw. das Bremsmoment vorgesehen ist, umfasst das Motor-Modell z. B. als positiven Anstieg einen Motormoment-Aufbau und als negativen Anstieg einen Motormoment-Abbau und das Bremsen-Modell vorzugsweise einen Bremsmoment-Aufbau als positiven Anstieg und einen Bremsmoment-Abbau als negativen Anstieg. In praktischer Weise kann der jeweilige Anstieg ermittelt werden, indem für die Zeitachse die Zeitschritte der Vorausschau betrachtet werden.

Vorzugsweise ist als Beschleunigungswert die maximal mögliche Beschleunigung des Fahrzeuges und als Verzögerungswert die maximal mögliche Verzögerung des Fahrzeuges vorgesehen.

Erfindungsgemäß wird der Fahrwiderstand ermittelt. Insbesondere kann Ermittlung über die Zeitschritte der Vorausschau bzw. die Zeitdauer der Vorausschau erfolgen.

Ferner wird erfindungsgemäß der Fahrwiderstand dann bei der Ermittlung des Beschleunigungswertes und/oder des Verzögerungswertes mitberücksichtigt. Dadurch wird die Bestimmungssicherheit noch zusätzlich erhöht.

Ferner kann mindestens ein Sensor zur Umfelderfassung vorgesehen sein, insbesondere eine Kamera und/oder ein Lidarsensor und/der ein Radarsensor und/oder ein Ultraschallsensor. Anhand der Sensordaten des Sensors oder der Sensoren kann die Fahrzeugumgebung sowie darin befindliche Objekte und Verkehrsteilnehmer erfasst werden. Dabei können auch die Sensordaten mehrerer Sensoren fusioniert werden, um die Umgebungs- und Objekterfassung noch zu verbessern.

In praktischer Weise kann das erfasste Fahrzeugumfeld inklusive darin befindlicher Objekte und Verkehrsteilnehmer zur Festlegung des Suchraumes und/oder zur Trajektorienplanung herangezogen werden. Dies kann z. B. dadurch erfolgen, dass der Suchraum nach möglichen Trajektorien zusätzlich eingegrenzt wird, da sich von den Sensoren detektierte Objekte im zuvor begrenzten Suchraum befinden. Ferner kann die Auswahl der zu befahrenden Trajektorie bei oder nach der Trajektorienplanung derart erfolgen, dass z. B. kollisionsvermeidende Aspekte berücksichtigt werden, indem eine Trajektorie ausgewählt wird, welche entlang des Straßenverlaufs und ohne Kollision mit anderen Objekten/-Verkehrsteilnehmern verläuft.

Ferner umfasst die vorliegende Erfindung ein Computerprogramm mit Programmcode zur Durchführung des erfindungsgemäßen Verfahrens, wenn das Computerprogramm in einem Computer oder einem sonstigen aus dem Stand der Technik bekannten programmierbaren Rechner ausgeführt wird. Demzufolge kann das Verfahren auch als rein computerimplementiertes Verfahren ausgestaltet sein, wobei der Begriff "computerimplementiertes Verfahren" im Sinne der Erfindung eine Ablaufplanung oder Vorgehensweise beschreibt, welche anhand eines Rechners verwirklicht bzw. durchgeführt wird. Der Rechner, wie z. B. ein Computer, ein Computernetzwerk oder eine andere aus dem Stand der Technik bekannte programmierbare Vorrichtung (z. B. eine einen Prozessor, Mikrocontroller oder dergleichen umfassenden Rechnervorrichtung), kann dabei mittels programmierbarer Rechenvorschriften Daten verarbeiten.

Zudem umfasst die vorliegende Erfindung ein computerlesbares Speichermedium, das Anweisungen umfasst, welche den Computer, auf dem sie ausgeführt werden, veranlassen, ein Verfahren nach mindestens einem der vorhergehenden Ansprüche durchzuführen.

Neben- oder untergeordnet umfasst die Erfindung auch eine Steuereinrichtung zur Steuerung eines Fahrzeuges entlang einer Trajektorie insbesondere in Längsrichtung, die derart hergerichtet ist, dass die Steuerung des Fahrzeuges anhand des erfindungsgemäßen Verfahrens erfolgt.

Unter dem Begriff Suchraum im Sinne der Erfindung wird die räumliche Erstreckung verstanden, innerhalb der die Steuereinheit nach möglichen fahrbaren Trajektorien sucht, wobei mehrere Trajektorien innerhalb des Suchraumes geplant werden können, um dann die jeweilige Trajektorie situationsadäquat auszuwählen.

Unter dem Begriff Grenzwert im Sinne der Erfindung wird ein Maximalwert oder Minimalwert der Stellgröße verstanden, d. h. ein Maximum bzw. Minimum, dessen Verlauf z. B. entlang der zurückgelegten Strecke bzw. der Zeit t erfasst werden kann.

Ausdrücklich umfasst sind von der Erfindung auch nicht explizit genannte Merkmalskombinationen der Merkmale bzw. Ansprüche, sogenannte Unterkombinationen.

Beschreibung der Erfindung anhand von Ausführungsbeispielen

Im Folgenden wird die Erfindung anhand von zweckmäßigen Ausführungsbeispielen näher beschrieben. Es zeigen:

Fig. 1 eine vereinfachte schematische Darstellung eines Fahrzeuges, bei dem eine Prädiktion einer maximalen Stellgröße anhand des erfindungsgemäßen Verfahrens erfolgt, sowie

Fig. 2 eine vereinfachte schematische Darstellung eines Ablaufplans des erfindungsgemäßen Verfahrens.

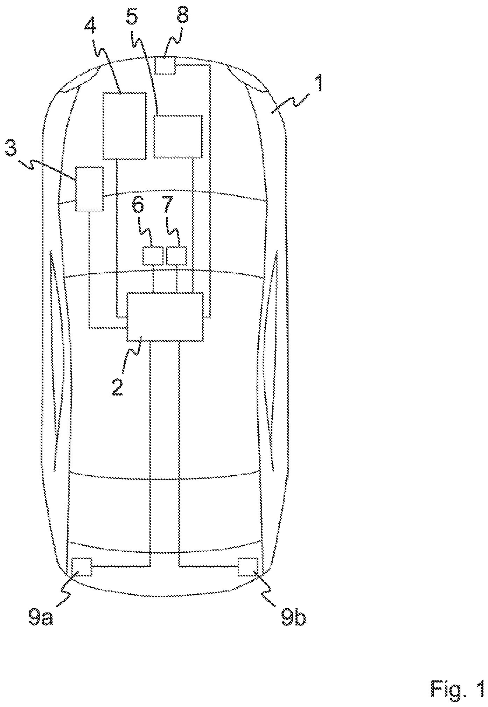

Bezugsziffer 1 in Fig. 1 bezeichnet ein Fahrzeug mit verschiedenen Aktoren (Lenkung 3, Motor 4, Bremse 5), welches eine Steuereinrichtung 2 (ECU, Electronic Control Unit) aufweist, durch die eine Trajektorienplanung in Bezug auf die Aktordynamik bzw. Aktordynamiken erfolgen kann. Die Trajektorie wird dabei anhand eines Trajektorienplaners berechnet, wobei eine Prädiktion einer maximalen Stellgröße des jeweiligen Aktors insbesondere in Längsrichtung zur Suchraumbegrenzung des Trajektorienplaners erfolgt und zur Trajektorienplanung herangezogen wird. Der Trajektorienplaner kann dabei als Hardwaremodul der Steuereinrichtung 2 oder als reines Softwaremodul ausgestaltet sein. Ferner weist das Fahrzeug 1 Sensoren zur Umfelderfassung auf (Kamera 6, Lidarsensor 7, Radarsensor 8 sowie Ultraschallsensoren 9a, 9b), deren Sensordaten zur Umfeld- und Objekterkennung genutzt werden, sodass verschiedene Assistenzfunktionen, wie z. B. Notbremsassistent (EBA, Electronik Brake Assist), Abstandsfolgeregelung (ACC, Automatic Cruise Control), Spurhalteregelung bzw. ein Spurhalteassistent (LKA, Lane Keep Assist) oder dergleichen, realisiert werden können. In praktischer Weise kann die Ausführung der Assistenzfunktionen ebenfalls über die Steuereinrichtung 2 oder eine eigene Steuereinrichtung erfolgen.

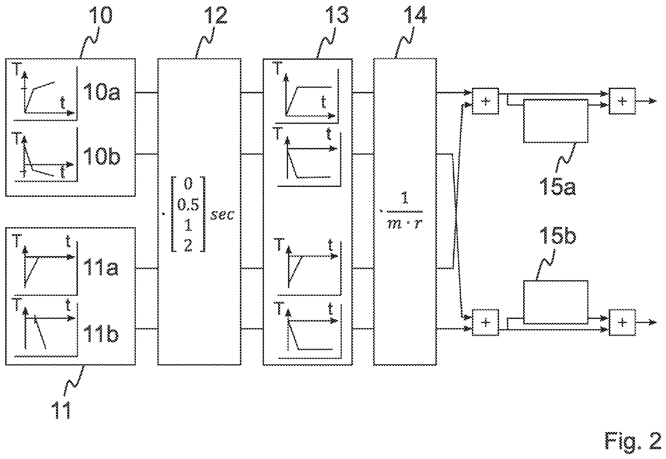

Das erfindungsgemäße Verfahren verwendet die Eingangssignale Fahrzeugbeschleunigung a, Fahrzeuggeschwindigkeit v, Bremsmoment $T_B$, Motormoment $T_M$, Motormoment-Minimum $T_{M,min}$, Motormoment-Maximum $T_{M,max}$ sowie den aktuell eingelegten Gang und stellt die beiden Ausgangs-Vektoren maximale Beschleunigung und maximale Verzögerung jeweils mit einer variablen Vorausschau bereit. Dabei sind die Fahrzeugparameter Getriebe-Übersetzungsverhältnisse $i_g$, Fahrzeugmasse m, Radradius r, Frontfläche A, Luftwiderstandsbeiwert $c_W$ (mit abnehmender Genauigkeits-Anforderung in dieser Reihenfolge) sowie Luftdichte $\rho_L$ (in kg/m$^3$) bekannt. Eine Ausgestaltung eines Ablaufplans bzw. vom Datenfluss des Verfahrens ist strukturell in Fig. 2 vereinfacht dargestellt.

Als Aktoren sind in Fig. 2 exemplarisch die Bremse und der Motor vorgesehen, welche anhand von den jeweils dazugehörigen Aktor-Modellen (Motor-Modell 10 und Bremsen-Modell 11) dargestellt sind, welche jeweils einen positiven Anstieg des Moments T für Momentaufbau (Motormoment-Aufbau 10a und Bremsmoment-Aufbau 11a) und einen negativen Anstieg des Moments T für Momentabbau (Motormoment-Abbau 10b und Bremsmoment-Abbau 11b) gegen die Zeit t aufweisen. Das Drehmoment bzw. Moment T wird dabei in Fig. 2 in Newtonmeter (Nm) und die Zeit in Sekunden (s) angegeben. Die Bremse ist dabei anhand einer lineareren Funktion mit Totzeit und Sättigung dargestellt, wobei die optional einzubeziehende Totzeit den ersten Steigungsabschnitt und die Sättigung den zweien Steigungsabschnitt der Funktion umfasst. Der Motor beim Motor-Modell 10 ist als stückweise definierte lineare Funktion mit optionaler Totzeit und Sättigung dargestellt, da z. B. Verbrennungs- und Elektromotoren bauartbedingt über einem Gang-abhängigen Motormoment-Grenzwert einen niedrigeren Moment-Gradient als unter dem Motormoment-Grenzwert liefert. Demgegenüber kann für einen Elektromotor mit Ein-Gang-Getriebe eine Modellierung wie beim Bremsen-Modell 11 gewählt werden.

Im Rahmen der Vorausschau 12 werden die maximalen steigenden und fallenden Gradienten der Aktoren jeweils mit dem Vektor der Vorausschau multipliziert, um die maximale positive und negative Änderung des (Dreh-) Moments T in den durch den Vektor angegebenen Zeitschritten (Zeit t in Sekunden s) zu bestimmen, wobei gemäß Fig. 2 folgende Zeitschritte gewählt wurden: 0 s, 0,5 s, 1 s und 2 s.

Ferner kann die maximale Drehmoment-Änderung in Summe mit dem aktuellen Drehmoment T nicht größer werden als die Absolut-Begrenzung des jeweiligen Aktors (d. h. beispielsweise Motormoment-Maximum $T_{M,max}$) und wird daher auf den möglichen Betriebsbereich des Aktors limitiert, wie anhand der Sättigung 13 dargestellt.

Anschließend erfolgt zweckmäßigerweise eine Konvertierung 14, bei der die (vier) Drehmoment-Änderungen mit der Fahrzeugmasse m und dem Radradius r in (vier) Fahrzeug-Beschleunigungen anhand von

$$a = T \cdot (m \cdot r)$$

umgerechnet werden. Aus der umgerechneten Summe von Motormoment-Aufbau und Bremsmoment-Abbau ergibt sich dann die maximale Fahrzeug-Beschleunigung. Entsprechend ergibt sich aus der umgerechneten Summe von Motormoment-Abbau und Bremsmoment-Aufbau die maximale Fahrzeug-Verzögerung.

Darüber hinaus wird für die ermittelte Fahrzeug-Verzögerung der Fahrwiderstand berücksichtigt. Dabei wird die berechnete Fahrzeugbeschleunigung angewendet, sodass sich über die Zeitdauer der Vorausschau eine Änderung des Fahrwiderstands ergibt. Diese verursacht ebenfalls eine Änderung der Beschleunigung. Die Berücksichtigung der Fahrtwiderstandsänderung 15a, 15b kann dabei erfolgen, indem

$$a_{res} = \frac{1}{2} \cdot c_w \cdot A \cdot \rho_L \cdot v_{diff}^2$$

angewendet wird.

Bei der Ausgabe (Pfeil rechts) werden dann die um den Einfluss der Fahrbahnwiderstandsänderung korrigierten Beschleunigungs- und Verzögerungs-Limits jeweils mit der Vorausschau, z. B. 0 s, 0,5 s,1 s, 2s oder dergleichen (variabel) abgebildet bzw. ausgegeben und an den Planer übermittelt.

Zusammenfassend kann durch die vorliegende Erfindung ein Prädiktionsverfahren zur Schätzung der aktuellen und zukünftigen Aktor-Limitierungen, insbesondere in Längsrichtung zur Verfügung gestellt werden. Diese Aktor-Limitierungen sollen dem Planer zur Verfügung gestellt werden, um die Berechnung von fahrbaren Trajektorien sicherzustellen. Insbesondere sollen dabei die zur Verfügung stehende Dynamik und die Absolut-Limitierungen der Aktoren Motor und Bremse geschätzt werden. Zudem sollen Fahrwiderstände mitberücksichtigt werden. Die geschätzten Aktor-Limits können dabei für den aktuellen Zeitpunkt sowie für eine zeitliche Vorausschau, welche sich am Planer orientiert, berechnet werden. Ferner können die geschätzten Aktor-Limits in Form von Fahrzeug-Längsbeschleunigungen an den Planer übertragen werden, um die Kompatibilität mit optimierungsbasierten sowie nicht-optimierungsbasierten Planungsansätzen zu realisieren. Darüber hinaus kann die vorliegende Erfindung auch für überaktuierte Systeme, z. B. Fahrzeuge mit einer Vorder- und Hinterachslenkung bzw. Allradfahrzeuge, angepasst werden, d. h. um weitere Längsaktuatoren erweitert werden. Zudem ist eine Anwendung auf redundante Aktuatorik möglich, z. B. eine "Brake-by-wire-Bremse" mit herkömmlicher Bremse als Rückfallpfad. Ferner ist das Verfahren nicht auf eine Regelung in Längsrichtung beschränkt, sondern kann auch für "Steer-by-Braking"-Methoden angewendet werden. Außerdem kann das Verfahren sowohl auf Planer-Konzepte und Regler-Ansätze als auch auf kombinierte Ansätze wie beispielsweise Modellprädiktive Regelung (MPC) angewendet werden.

**Patentansprüche**

1. Verfahren zur Steuerung eines Fahrzeuges (1) mit mindestens einem Aktor entlang einer Trajektorie, bei dem die Trajektorie innerhalb eines Suchraumes unter Berücksichtigung einer Vorausschau mindestens einer Stellgröße des Aktors geplant wird, umfassend folgende Verfahrensschritte:

- Erstellen eines Aktor-Modells des Aktors anhand der mindestens einen Stellgröße des Aktors,
- Festlegen von Zeitschritten der Vorausschau,
- Ermitteln der Stellgrößenänderung des Aktors entlang der Zeitschritte anhand des Aktor-Modells und eines Grenzwertes der Stellgröße, wobei als Grenzwert die maximal mögliche Änderung der Stellgröße in positiver und/oder negativer Richtung vorgesehen ist,
- Begrenzen des Suchraumes anhand des Grenzwertes der Stellgröße des Aktors,
- Ermitteln eines Beschleunigungswertes und/oder eines Verzögerungswertes des Fahrzeuges (1) durch Konvertieren der mindestens einen Stellgröße mit der Fahrzeugmasse und dem Radradius, wobei der Fahrwiderstand ermittelt wird und bei der Ermittlung des Beschleunigungswertes und/oder des Verzögerungswertes mitberücksichtigt wird, und
- Ausgabe des Beschleunigungswertes und des Verzögerungswertes zur Begrenzung des Suchraumes innerhalb dem die Trajektorie geplant wird.

2. Verfahren nach Anspruch 1, **dadurch gekennzeichnet, dass** als Aktor ein Motor (4) und/oder eine Bremse (5) des Fahrzeuges (1) vorgesehen ist.

3. Verfahren nach Anspruch 1 oder 2, **dadurch gekennzeichnet, dass** als Stellgröße ein Moment, insbesondere ein Motormoment des Motors (4) oder ein Bremsmoment der bremse (5) vorgesehen ist.

4. Verfahren nach mindestens einem der vorhergehenden Ansprüche, **dadurch gekennzeichnet, dass** das Aktor-Modell auf einer Funktion der Stellgröße basiert und einen positiven Anstieg der Stellgröße für den Stellgrößenaufbau und einen negativen Anstieg der Stellgröße für den Stellgrößenabbau gegen die Zeit t umfasst.

5. Verfahren nach mindestens einem der vorhergehenden Ansprüche, **dadurch gekennzeichnet, dass** als Beschleunigungswert die maximal mögliche Beschleunigung des Fahrzeuges (1) und als Verzögerungswert die maximal mögliche Verzögerung des Fahrzeuges (1) vorgesehen ist.

6. Verfahren nach mindestens einem der vorhergehenden Ansprüche **dadurch gekennzeichnet, dass** mindestens ein Sensor zur Umfelderfassung vorgesehen ist, insbesondere eine Kamera (6) und/oder ein Lidarsensor (7) und/der ein Radarsensor (8) und/oder ein Ultraschallsensor.

7. Verfahren nach Anspruch 6, **dadurch gekennzeichnet, dass** das erfasste Umfeld zur Festlegung des Suchraumes (9) und/oder zur Trajektorienplanung herangezogen wird.

8. Computerprogramm mit Programmcode zur Durchführung eines Verfahrens nach mindestens einem der vorhergehenden Ansprüche, wenn das Computerprogramm auf einem Computer ausgeführt wird.

9. Computerlesbares Speichermedium umfassend Anweisungen, welche den Computer, auf dem sie ausgeführt werden, veranlassen, ein Verfahren nach mindestens einem der Ansprüche 1-7 auszuführen.

10. Steuereinrichtung (2) zur Steuerung eines Fahrzeuges (1) entlang einer Trajektorie **dadurch gekenn-**

**zeichnet, dass** die Steuerung des Fahrzeuges (1) anhand eines Verfahrens nach mindestens einem der Ansprüche 1-7 erfolgt.

**Claims**

1. Method for controlling a vehicle (1) with at least one actuator along a trajectory, in which the trajectory is planned within a search space while taking into consideration a prediction of at least one manipulated variable of the actuator, comprising the following method steps:

   - creating an actuator model of the actuator on the basis of the at least one manipulated variable of the actuator,
   - defining time increments of the prediction,
   - determining the change in the manipulated variable of the actuator along the time increments on the basis of the actuator model and a limit value of the manipulated variable, with the maximum possible change in the manipulated variable in the positive and/or negative direction being provided as the limit value,
   - limiting the search space on the basis of the limit value of the manipulated variable of the actuator,
   - determining an acceleration value and/or a deceleration value of the vehicle (1) by converting the at least one manipulated variable with the vehicle mass and the wheel radius, with the running resistance being determined and also taken into consideration in the determination of the acceleration value and/or the deceleration value, and
   - outputting the acceleration value and the deceleration value to limit the search space within which the trajectory is planned.

2. Method according to Claim 1, **characterized in that** an engine (4) and/or a brake (5) of the vehicle (1) is provided as the actuator.

3. Method according to Claim 1 or 2, **characterized in that** a torque, in particular an engine torque of the engine (4) or a braking torque of the brake (5), is provided as the manipulated variable.

4. Method according to at least one of the preceding claims, **characterized in that** the actuator model is based on a function of the manipulated variable and comprises a positive gradient of the manipulated variable for manipulated variable build-up and a negative gradient of the manipulated variable for manipulated variable reduction with respect to time t.

**5.** Method according to at least one of the preceding claims, **characterized in that** the maximum possible acceleration of the vehicle (1) is provided as the acceleration value and the maximum possible deceleration of the vehicle (1) is provided as the deceleration value.

**6.** Method according to at least one of the preceding claims, **characterized in that** at least one sensor for detecting the surrounding area is provided, in particular a camera (6) and/or a lidar sensor (7) and/or a radar sensor (8) and/or an ultrasonic sensor.

**7.** Method according to Claim 6, **characterized in that** the detected surrounding area is used for defining the search space (9) and/or for the trajectory planning.

**8.** Computer program with program code for carrying out a method according to at least one of the preceding claims when the computer program is run on a computer.

**9.** Computer-readable storage medium comprising instructions which cause the computer on which they are performed to carry out a method according to at least one of Claims 1-7.

**10.** Control device (2) for controlling a vehicle (1) along a trajectory, **characterized in that** the control of the vehicle (1) takes place on the basis of a method according to at least one of Claims 1-7.

**Revendications**

**1.** Procédé de direction d'un véhicule (1) avec au moins un actionneur le long d'une trajectoire, la trajectoire étant planifiée à l'intérieur d'un espace de recherche en tenant compte d'une prédiction d'au moins une variable d'ajustement de l'actionneur, comprenant les étapes de procédé suivantes :

- création d'un modèle d'actionneur de l'actionneur sur la base de ladite au moins une variable d'ajustement de l'actionneur,
- établissement des étapes temporelles de la prédiction,
- détermination de la variation de la variable d'ajustement de l'actionneur tout au long des étapes temporelles sur la base du modèle d'actionneur et d'une valeur limite de la variable d'ajustement, la valeur limite étant prévue comme étant la variation maximale possible de la variable d'ajustement dans un sens positif et/ou négatif,
- limitation de l'espace de recherche sur la base de la valeur limite de la variable d'ajustement de l'actionneur,
- détermination d'une valeur d'accélération et/ou d'une valeur de décélération du véhicule (1) par conversion de ladite au moins une variable d'ajustement à l'aide de la masse du véhicule et du rayon de roue, la résistance à l'avancement étant déterminée et étant prise en compte lors de la détermination de la valeur d'accélération et/ou de la valeur de décélération, et
- fourniture en sortie de la valeur d'accélération et de la valeur de décélération pour limiter l'espace de recherche à l'intérieur duquel la trajectoire est planifiée.

**2.** Procédé selon la revendication 1, **caractérisé en ce qu'**il est prévu en tant qu'actionneur un moteur (4) et/ou un frein (5) du véhicule (1).

**3.** Procédé selon la revendication 1 ou 2, **caractérisé en ce qu'**il est prévu en tant que variable d'ajustement un couple, en particulier un couple moteur du moteur (4) ou un couple de freinage du frein (5).

**4.** Procédé selon l'une quelconque des revendications précédentes, **caractérisé en ce que** le modèle d'actionneur se base sur une fonction de la variable d'ajustement et comprend une pente positive de la variable d'ajustement pour l'augmentation de la variable d'ajustement et une pente négative de la variable d'ajustement pour la diminution de la variable d'ajustement en fonction du temps t.

**5.** Procédé selon l'une quelconque des revendications précédentes, **caractérisé en ce qu'**il est prévu en tant que valeur d'accélération l'accélération maximale possible du véhicule (1) et en tant que valeur de décélération la décélération maximale possible du véhicule (1).

**6.** Procédé selon au moins l'une des revendications précédentes, **caractérisé en ce qu'**il est prévu au moins un capteur destiné la détection de l'environnement, en particulier une caméra (6) et/ou un capteur lidar (7) et/ou un capteur radar (8) et/ou un capteur à ultrasons.

**7.** Procédé selon la revendication 6, **caractérisé en ce que** l'environnement détecté est utilisé pour établir la zone de recherche (9) et/ou pour planifier la trajectoire.

**8.** Programme informatique comprenant un code de programme destiné à la mise en œuvre d'un procédé selon au moins l'une des revendications précédentes, lorsque le programme informatique est exécuté sur un ordinateur.

**9.** Support de stockage lisible par ordinateur comprenant des instructions qui amènent l'ordinateur sur lequel elles sont exécutées à mettre en œuvre un procédé selon l'une quelconque des revendications 1-7.

**10.** Dispositif de direction (2) pour la direction d'un véhicule (1) le long d'une trajectoire, **caractérisé en ce que** la direction du véhicule (1) s'effectue sur la base d'un procédé selon l'une quelconque des revendications 1-7.

Fig. 1

Fig. 2

**IN DER BESCHREIBUNG AUFGEFÜHRTE DOKUMENTE**

**In der Beschreibung aufgeführte Patentdokumente**

- DE 102016221723 A1
- DE 102015209066 A1
- DE 102018203617 A1
- DE 102017213650 A1
- DE 102017114731 A1

**In der Beschreibung aufgeführte Nicht-Patentliteratur**

- Reacting to Multi-Obstacle Emergency Scenarios Using Linear Time Varying Model Predictive Control. **JAIN VASUNDHARA et al.** 2019 IEEE INTELLIGENT VEHICLES SYMPOSIUM (IV). IEEE, 09 June 2019, vol. 1, 822-1829
- Motion planning for an autonomous vehicle driving on motorways by using flatness properties. **YANFENG CONG et al.** CONTROL APPLTCATTONS (CCA), 2010 IEEE TNTERNATIONAL CONFERENCE ON. IEEE, 08 September 2010, 908-91 3